# EUROPEAN PATENT SPECIFICATION

(11) **EP 0 424 155 B1**
(45) Date of publication and mention of the grant of the patent: **05.01.1994**
(21) Application number: 90311452.8
(22) Date of filing: 18.10.1990
(51) Int. Cl.: B60C 11/00, B60C 11/11

(54) **A pneumatic radial tyre**
Radialer Luftreifen
Bandage pneumatique radial

(30) Priority: 19.10.1989 JP 272460/89; 29.12.1989 JP 341264/89
(43) Date of publication of application: 24.04.1991
(73) Proprietor: SUMITOMO RUBBER INDUSTRIES LIMITED, Kobe-shi Hyogo-ken (JP)
(72) Inventor: Saito, Kenji, Kobe-shi, Hyogo-ken (JP); Kajikawa, Akira, Kobe-shi, Hyogo-ken (JP); Asano, Kazuo, Kobe-shi, Hyogo-ken (JP)
(74) Representative: Stewart, Charles Geoffrey

(56) References cited:
- EP-A- 0 331 453
- FR-A- 2 304 487
- GB-A- 2 198 996
- PATENT ABSTRACTS OF JAPAN vol. 14, no. 147 (M-952)(4090) 20 March 1990,& JP-A-02 11404 (THE YOKOHAMA RUBBER COMPANY LTD.) 16 January 1990,

## Description

The present invention relates to a pneumatic radial tyre with improved cornering characteristics.

With the recent trend to higher speeds and higher performance vehicles, tyres need to give improved stability in high speed running, performance and breakaway controllability in cornering, both on dry and wet road surfaces.

Hitherto such problems have been tackled by the double crown radius profile construction for the tread surface contour.

In the conventional double crown radius radial tyre, however, although the steering wheel response and road surface gripping performance are somewhat enhanced when running straight or at the initial moment of turning, the limit performance in cornering, and particularly for example the breakaway controllability, are not improved sufficiently.

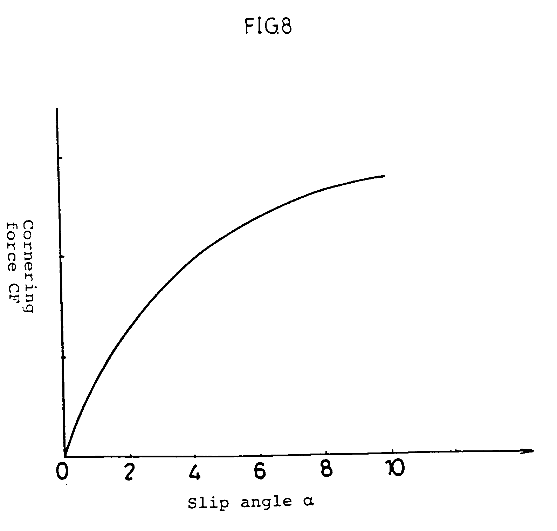

Breakaway controllability in this case refers to the phenomenon when the tyre skids and thus escapes from the cornering locus as the cornering force generated on the ground contact surface becomes insufficient to equal or overcome the centrifugal force by the slip angle of cornering. This occurs, as shown in Figure 8, when the cornering force CF which has initially been increasing approximately in proportion to the slip angleα for the small slip angle range but then gradually decreases in rate of increase in the large slip angle range.

A pneumatic radial tyre having a tread surface contour comprising three arcs is known, e.g. from GB-A-2198996.

It is hence a primary object of the invention to provide a pneumatic radial tyre capable of giving improved limit performance when cornering, and more especially to enhance the steering stability of high speed running.

According to the present invention, a pneumatic radial tyre comprises a carcass extending from a tread part through sidewall parts and folded at each edge around a bead core of a bead part, and belt layer composed of belt plies disposed radially outside said carcass, wherein a tread surface is formed along a specific curvature plane which includes a first arc with a radius of curvature having a centre on the tyre's equatorial plane and passing through the tyre's equatorial point, a second arc with a radius of curvature intersecting said first arc at an intersection spaced from the tyre's equatorial plane, and a third arc with a radius of curvature , and the tread surface is provided with a main circumferential groove extending near said intersection of the first arc and the second arc in the tyre circumferential direction dividing the tread surface into the crown part and its outer shoulder part characterised in that the second arc has its centre on the tyre's equatorial plane, the intersection point is spaced from the tyre's equatorial plane by a distance 0.2 to 0.25 times the tyre width, the third arc passes through a ground contact outer edge point of the ground contact surface in the axial direction of a tyre when a standard load is applied and a belt intermediate height point on the tread surface where said belt intermediate height point on the tread surface is defined as a point at which a tyre axial direction line extending in parallel with the tyre's axis from a thickness centre of the belt layer at an axial outer edge of a region where at least two belt plies overlap each other crosses the tread surface and the specific curvature plane has a radius of curvature ratio of 4 to 12.

Preferably, the main circumferential groove has a groove width of 0.06 times to 0.10 times the tyre width SW, and narrow lateral grooves crossing the tyre circumferential direction divide the crown part and shoulder part into blocks are divided in the crown part and the shoulder part. The crown part of shoulder part may have a subsidiary circumferential groove extending in the tyre circumferential direction, with a groove width of 0.1 times to 0.3 times the groove width of the main circumferential groove. On the other hand, in the specific curvature plane, a curvature radius ratio R2/R3 may be set at 4 to 12, and a curvature radius ratio R1/R2 set at 2.6 to 4.6 when the aspect ratio is 0.55 or less. Furthermore, the curvature radius ratio R1/R2 may be 1.6 to 2.6 when the aspect ratio is more than 0.55 and less than 0.70, and the curvature radius ratio R1/R2 may be 1.2 to 1.6 when the aspect ratio is 0.70 or more.

The tread surface is formed along a specific curvature plane having a first arc, a second arc and a third arc. Therefore, while improving the ground contact surface shape, in addition to straight-forward stability in high speed running, the breakout controllability in cornering is enhanced, and the turning stability is improved.

Near the intersection of the first arc and the second arc, there may be a wide main circumferential groove with a groove width of 0.06 times to 0.10 times the tyre width. As a result the disturbance of ground contact likely to occur at the intersection of the arcs is eliminated, and the cornering force is further increased whilst improving the water draining and ground contacting performances and thereby enhancing the wet braking performance. The crown part and shoulder part having blocks divided by lateral grooves increases the gripping force with the road surface to improve the running performance.

An embodiment of the present invention will now be described, by way of example, referring to the attached diagrammatic drawings, in which:
Figure 1 is a section view showing an embodiment of the invention;
Figure 2 is a partial view of the flattened tread showing the groove;
Figure 3 is a diagram showing the contour profile of the tread surface;
Figure 4 is a diagram showing the specific curvature plane,
Figures 5(a) to (e) are schematic drawings showing the ground contact surface shape;
Figure 6 is a schematic drawing showing the ground contact surface shape when turning;
Figure 7(a) is a diagram showing the relation between radius ratio R2/R3 and ground contact width;
Figure 7(b) is a diagram showing the relation between the radius ratio R2/R3 and breakaway controllability; and
Figure 8 is a diagram showing the relation between the cornering force and slip angle.

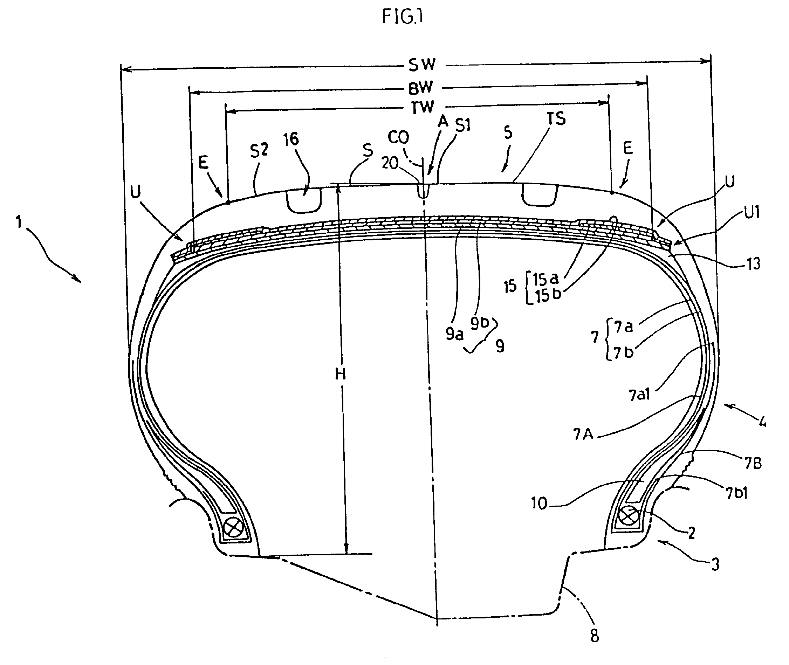

Figure 1 shows an embodiment of the invention mounted on a standard rim 8 and inflated to the standard internal pressure.

The pneumatic radial tyre 1 is a low aspect tyre comprising a pair of bead parts 3 each having a bead core 2, sidewall parts 4 extending from the bead parts 3 outwardly in the radial direction of the tyre, and a tread part 5 for linking between their outer ends. The aspect ratio H/SW of the tyre sectional height H to the tyre width SW is 0.62.

Between the bead parts 3 is a carcass 7 having a main body part 7A extending through the tread part 5 and sidewall parts 4 and having edges folded back from the inside to the outside around the bead core 2. A belt layer 9 is provided on the carcass 7 inwards of the tread part 5.

The carcass 7 is composed of two carcass plies 7a,7b having carcass cords, which are made of organic fibre cords such as nylon, polyester or aromatic polyamide, arranged at an angle of 70 to 90 degrees with respect to the tyre equator CO. The inside carcass ply 7a covers the folded edge 7b1 of the outside carcass ply 7b, and the folded edge 7a1 of the inside carcass ply 7a is terminated near the maximum width position of the tyre in the standard internal pressure state. Between the main body part 7A of the carcass 7 and the folding part 7B, there is a bead apex 10 extending from the bead core 7 a in a taper form in the tyre radial direction, made of hard rubber with JISA hardness of 65 to 90 degrees, which together with the high turn up structure of the carcass 7 enhances the tyre lateral rigidity.

The bead part 3 comprises known reinforcing structures including, for example, a bead filler for reinforcing the bead apex 10 together with the bead core 2, and a rim dislocation preventive chafer.

The belt layer 9 is a two-ply structure consisting of an inside belt ply 9a adjacent to the outside of the carcass 7 and an outside belt ply 9b. The belt layer 9 along the carcass 7 has a width BW broader than the tyre ground contact width TW so as to reinforce the tread part 5 over almost its entire width by its hoop effect. The tyre ground contact width TW mentioned herein refers to the linear length between the ground contact outer edge points E which are points on the outer edge of the trade ground contact surface TS in the axial direction when the tyre is mounted on the standard rim 8, inflated to the standard internal pressure, and loaded with the standard load. The belt width BW is the linear length between the belt outer edges U, which are axially outer edges of the regions where at least two belt plies overlap to each other, under the same standard inflation pressure and loading.

The belt width BW should be preferably 0.7 times or more and 0.85 times or less of the tyre width SW. More specifically, if BW is less than 0.7 times SW, there is an insufficient restraint force on the carcass 7, especially on the overhang part of the carcass 7 projecting from the bead part 3 to outside in the tyre axial direction along with the promotion of depression. This lack of restraint force makes the ground contact pressure in this area uneven as the outside diameter is grown in the radial direction of the tyre in the shoulder part due to the centrifugal force and tyre internal pressure along with high speed revolution.

Conversely if BW exceeds 0.85 times SW, the tyre rigidity is increased excessively and the ride comfort deteriorates. Therefore, the belt width BW should be preferably 0.75 to 0.85 times the tyre width SW.

The belt plies 9a,9b are composed of belt cords inclining at an angle of 10 to 30 degrees with respect to the tyre circumferential direction. The belt cords are made of high modulus cords with an initial tensile elasticity of about 2500 kg/cm² or higher, for example, organic fibre cords such as aromatic polyamide fibre and carbon fibre, or inorganic fibre cords such as metal fibre and glass fibres. Steel cords are used in this embodiment. Depending on requirements, cords of different materials may be used for each of the belt plies 9a and 9b. At the end of the belt layer 9, a soft breaker cushion 13 is placed against the carcass to alleviate the stress.

Outside the belt layer 9, a reinforcing band 15, which is made of organic fibre cord of relatively high strength and low mass such as nylon cord, is provided to suppress the lifting of the belt layer 9 due to centrifugal force. The reinforcing band 15 is composed of a first band ply 15a which covers the outer end of the belt ply 9b to prevent separation from the outer end, and a second band ply 15b which covers the entire width of the belt layer 9 and together with the first band ply 15a improves the tread stiffness uniformly.

In the outside surface S of the tread part 5, are disposed a pair of main circumferential grooves 16 which divide the tread surface S into a crown part S1, including the tyre equator CO, and outer shoulder parts S2. The grooves 16 extend linearly in the tyre's circumferential direction near the intersection HP of the first arc P1 and second arc P2 which form the specific curvature plane P of the tread surface S.

The specific curvature plane P comprises, as shown in Figure 4, a first arc P1, a second arc P2 and a third arc P3.

The first arc P1 has a radius of curvature R1 and is centred on the tyre's equatorial plane and passes through the tyre's equatorial point A. The second arc P2 has a radius of curvature R2 and is centred on the tyre's equatorial plane and intersects the first arc P1 at the intersection HP, spaced from the tyre's equatorial plane by a distance 0.2 to 0.25 times the tyre width SW.

The third arc P3 has a radius of curvature R3 and is centred on the normal line (n) constructed on the tread surface S at the ground contact outer edge point E, and passes through the belt intermediate height point F and the ground contact outer edge point E. The belt intermediate height point F is the point at which the tyre axial direction line L extending parallel to the tyre axis from the thickness centre of the belt layer 9 at the axial outer edge U of said region crosses the tread surface S. The third arc P3 is smoothly contiguous to the second arc P2 through the couple arc P2a.

The tyre outer surface between the said belt intermediate height points F is herein called the tread surface TS.

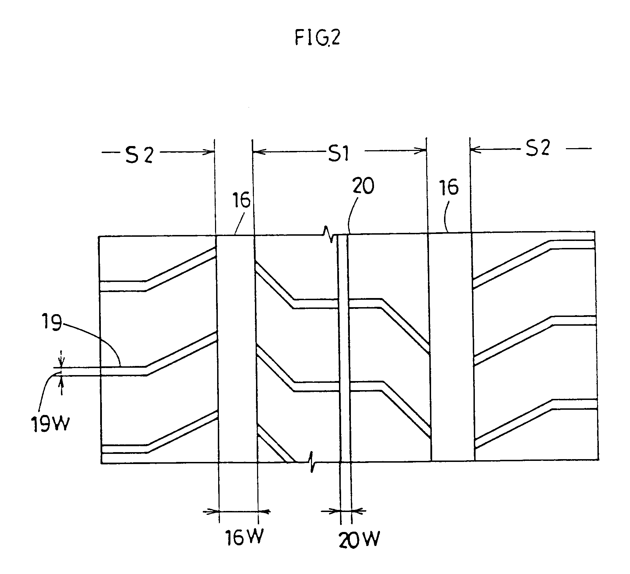

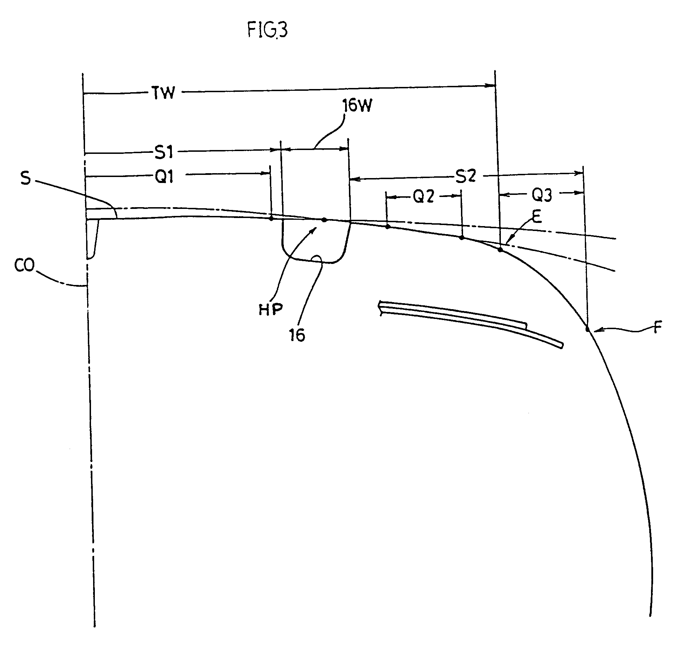

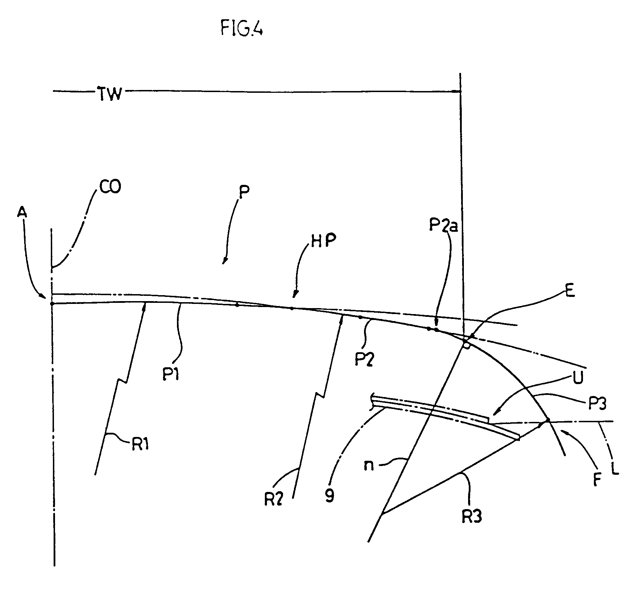

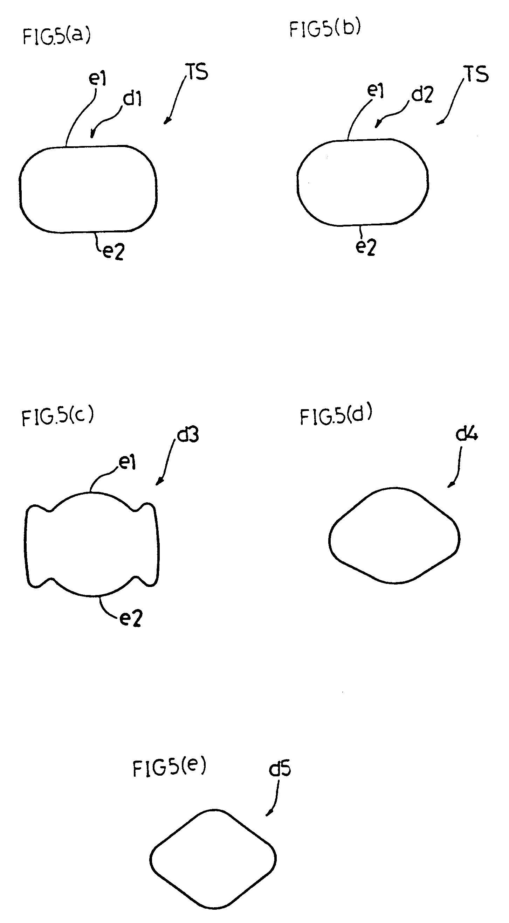

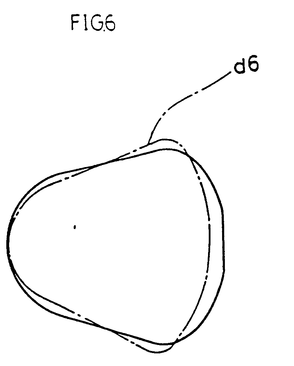

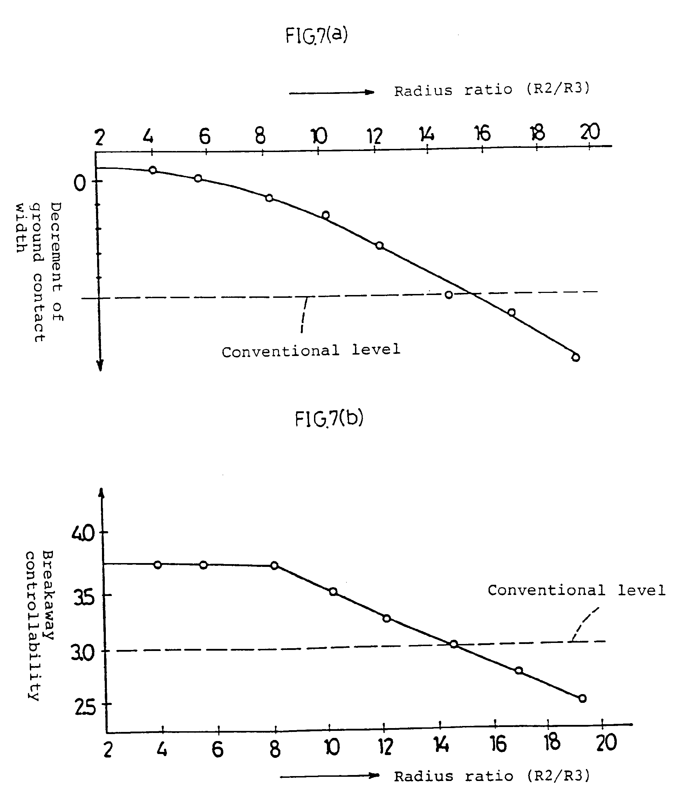

The main circumferential grooves 16 extend, as shown in Figure 2, in the tyre circumferential direction near the intersection HP of the first arc P1 and second arc P2. In the crown part S1 and in the shoulder part S2, lateral grooves 19 intersecting the main circumferential grooves 16 are disposed at specific intervals so that the parts S1 and S2 are divided into multiple blocks. The lateral grooves 19, in this embodiment, has a narrow width 19W and a geometrically folded or bent shape.

In the crown part S1, there are subsidiary circumferential grooves 20 extending in the tyre circumferential direction approximately parallel to the main circumferential grooves 16. These subsidiary circumferential grooves 20 may be disposed in the shoulder parts S2, or may be in both the crown part S1 and the shoulders parts S2.

The main circumferential grooves 16 and subsidiary circumferential grooves 20 are straight grooves in this embodiment, and the groove width 16W of the main circumferential grooves 16 in the range 0.6 times to 0.10 times the tyre width SW. Thus, the water draining effect is enhanced whilst reducing the fall off of cornering force. If the groove width 16W is less than 0.06 times the tyre width SW, the brake performance on the wet road is insufficient, whilst if it exceeds 0.10 times, so-called railway wear or other uneven wear is encourage near the groove edges.

By the area "near the intersection HP" is meant the length of not more than 1/2 of the main circumferential groove width 16W, that is, the range in which the opening of the main circumferential grooves 16 can pass through the intersection HP.

The subsidiary circumferential grooves 20 are designed to enhance the gripping performance in cornering and to maintain steering stability. In order to suppress the pattern noise by relaxing the road surface impact noise of the blocks, the groove width 20W is 0.1 to 0.3 times the groove width 16W of the main circumferential groove 16. If less than 0.1 the water draining performance is insufficient, and if exceeding 0.3 the pattern rigidity in the widthwise direction is decreased, thereby lowering the steering wheel response and breakaway controllability.

The number of subsidiary circumferential grooves should be preferably one to four, and in addition to the main circumferential grooves 16, lateral grooves 19 and subsidiary circumferential grooves 20, the tread pattern may have formed in it various features, for example sipes and lug grooves.

With regard to radii of curvature R1 and R2 in this embodiment in which the aspect rate H/SW is 0.62, the radius ratio R1/R2 is 1.6 to 2.6, and the radius ratio R2/R3 is 4 to 12 where the radii of curvature R1, R2 and R3 are in the specific curvature plane P.

This specific curvature plane P found by the inventors is an ideal curved surface capable of enhancing the steering stability from the viewpoint of ground contact surface shape. That is, by employing this specific curvature plane P, ground contact surface TS such as the shapes d1 and d2 shown in Figures 5(a) and (b), which are approximately oblong rectangular shapes wherein the ground contact front and rear edges e1 and e2 are nearly parallel to the tyre axis, can be obtained. As a result, an even ground contact pressure distribution and a high cornering force are obtained, and the steering wheel response and gripping performance when running straight or at the beginning of turning are enhanced.

If the radius ratio R1/R2 is less than 1.6, as shown in Figure 5(c), the ground contact length of the crown part S1 is longer than the ground contact length of the shoulder part S2, and the ground contact front and rear edges e1 and e2 become curves, so that an irregular wing-shaped ground surface shape d3 is formed. This is inferior in ground contact performance. If the radius ratio R1/R2 is 2.6 or more, as shown in Figures 5(d) and (e), the ground contact length of the crown part S1 becomes very long and irregular, and nearly rhombic ground contact shapes d4, d5 are formed. Thus the ground contact performance is non-uniform, and the cornering force is lowered.

Furthermore, in the specific curvature plane P, the radius ratio R2/R3 of the second arc P2 and the third arc P3 is in the range of 4 to 12. Therefore, when cornering, the third arc P3, which is outside the ground contact outer edge point E, can be newly set on the ground, as shown in Figure 6, as compared with the ground contact surface shape d6 in the prior art. As a result, decrease of ground contact width and increase of ground contact length are suppressed, so that the cornering force is optimised.

According to Figures 7(a), 7(b) showing the relationship of the radius ratio R2/R3 and the ground contact width decrement and the breakaway controllability, as far as the radius ratio R2/R3 is in a range of 12 or less, especially 10 or less, the decrease of ground contact width can be suppressed, and the cornering force can be increased, so that the breakaway controllability is enhanced. However, if the radius ratio R2/R3 is less than 4, the uneven wear resistance is lowered, and therefore the radius ratio R2/R3 is in a range of 4 to 12, or more preferably 6 to 10. Figure 7(a) shows the measurement when the slip angle is 5 degrees, and the broken line indicates the conventional level. Figure 7(b) shows the result of evaluation of breakaway controllability by an actual vehicle feel test, and the broken line refers to the conventional tyre.

In order to effectively exhibit the characteristics of this specific curvature plane P, as shown in Figure 3, it is necessary to keep the tread surface S in contact with the specific curvature plane P, at least in a range Q1 of the length of 30% of the tyre width SW around the tyre's equator CO, a range Q2 distant from the tyre's equator by 37.5% or more and 45% or less of the tyre ground contact width TW, and a range Q3 between the ground contact outer edge point E and the belt intermediate height point F. In this example, meanwhile, the main circumferential grooves 16 are disposed between the range Q1 and the range Q2, and a nearly smooth curvature surface is contiguous, including the spacing between the range Q2 and the range Q3. As a result, the tread surface S having nearly the same high steering stability performance as the specific curvature plane P is obtained. Meanwhile, the other regions than the ranges Q1, Q2, Q3 may be further set along the specific curvature plane P, or the entire surface of the tread may be formed along the specific curvature plane P.

With regard to the relation between the aspect ratio H/SW and the radius ratio R1/R2, when the aspect ratio H/SW is 0.55 or less, the ratio R1/R2 is 2.6 to 4.6. When the aspect ratio H/SW is more than 0.55 and less than 0.70, the ratio R1/R2 is 1.6 to 2.6, and when the aspect ratio H/SW is 0.7 or more, the ratio R1/R2 is 1.2 to 1.6. Then, when the slip angle is zero degrees, it is found that the ground contact surface shape is optimised as in Figures 5(a),(b). This is because the deflection when the tyre contacts the ground is larger as the aspect ratio H/SW of the tyre is larger, that is, the tyre sectional height H is proportionately larger, and therefore by setting the radius of curvature R2 closer to the radius of curvature R1, a ground contact surface with an oblong rectangular shape with the ground contact front and rear edges approximately parallel to the tyre axis is obtained.

To illustrate the effectiveness of the invention a tyre having a structure as shown in Figure 1 and with the size of 225/50R16 conforming to the specification in Table 1 was experimentally manufacture, and the steering stability of this tyre was tested by actually driving the vehicle on both dry and wet road surfaces to evaluate feel. The results of the evaluation are given in Table 1 on a five-point scoring system, in which the higher score means a higher evaluation.

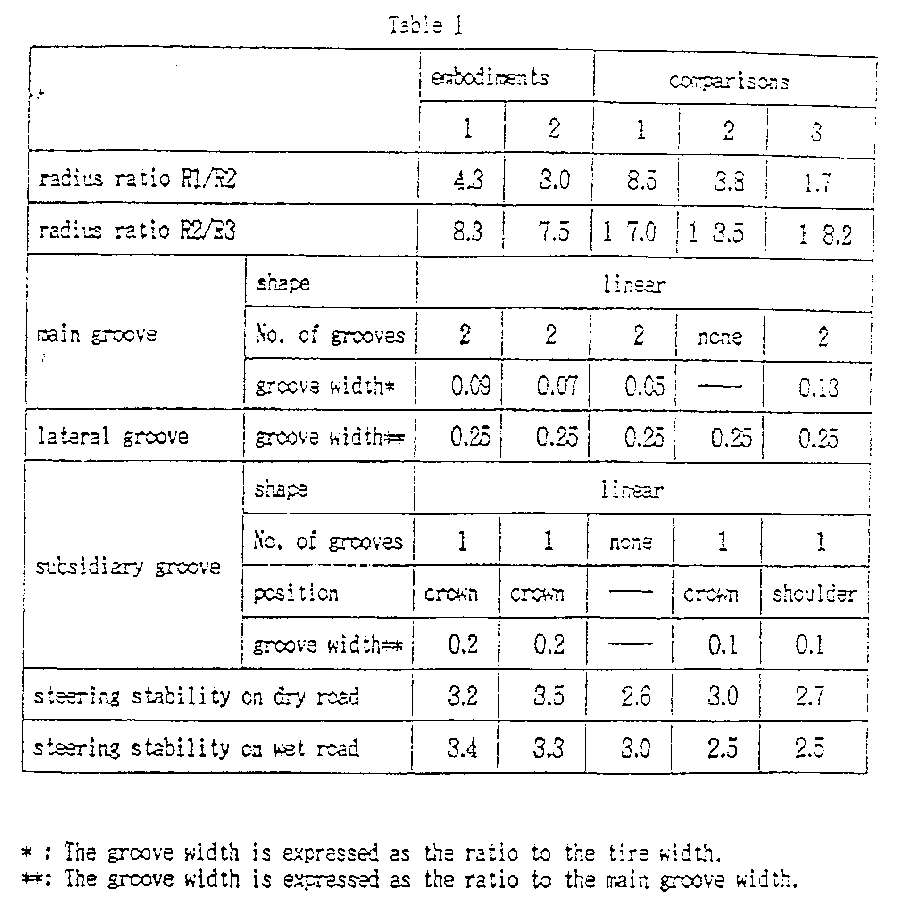

## Claims

1. A pneumatic radial tyre comprising a carcass (7) extending from a tread part (5) through sidewall parts (4) and folded at each edge around a bead core (2) of a bead part (3), and belt layer (9) composed of belt plies (9a,9b) disposed radially outside said carcass (7), wherein a tread surface TS is formed along a specific curvature plane P which includes a first arc P1 with a radius of curvature R1 having its centre on the tyre's equatorial plane and passing through the tyre's equatorial point A, a second arc P2 with a radius of curvature R2 intersecting said first arc at an intersection HP spaced from the tyre's equatorial plane and a third arc P3 with a radius of curvature R3 and the tread surface TS is provided with a main circumferential groove (16) extending near said intersection HP of the first arc P1 and the second arc P2 in the tyre circumferential direction dividing the tread surface TS into the crown part S1 and its outer shoulder part S2 characterised in that the second arc P2 has its centre on the tyre's equatorial plane, the intersection point HP is spaced from the tyre's equatorial plane by a distance 0.2 to 0.25 times the tyre width, the third arc P passes through a ground contact outer edge point E of the ground contact surface in the axial direction of the tyre when a standard load is applied and a belt intermediate height point F on the tread surface TS, where said belt intermediate height point F on the tread surface TS is defined as a point at which a tyre axial direction line extending in parallel with the tyre's axis from the thickness centre of the belt layer (9) at the axial outer edge of a region where at least two belt plies overlap each other crosses the tread surface TS, and the specific curvature plane P has a radius of curvature ratio R2/R3 of 4 to 12.

2. A pneumatic radial tyre according to claim 1, characterised in that the main circumferential groove (16) has a groove width (16W) of 0.06 times to 0.10 times the tyre width SW, and narrow lateral grooves (19) crossing the tyre circumferential direction divide the crown part S1 and shoulder parts S2 into blocks.

3. A pneumatic radial tyre according to claim 1 or 2, characterised in that the crown part S1 or shoulder part S2 has a subsidiary circumferential groove (20) extending in the tyre circumferential direction having a groove width (20W) of 0.1 to 0.3 times the groove width (16W) of the main circumferential groove.

4. A pneumatic radial tyre according to claim 1, 2 or 3, characterised in that the specific curvature plane P has a radius of curvature ratio R1/R2 of 2.6 to 4.6 when the aspect ratio H/SW of the tyre section height H to the tyre width SW is 0.55 or less.

5. A pneumatic radial tyre according to claim 1, 2 or 3, characterised in that the specific curvature plane P has a radius of curvature ratio R1/R2 of 1.6 to 2.6 when the aspect ratio H/SW of the tyre sectional height H to the tyre width SW is more than 0.55 and less than 0.70.

6. A pneumatic radial tyre according to claim 1, 2 or 3, characterised in that the specific curvature plane P has a radius of curvature ratio R1/R2 of 1.2 to 1.6 when the aspect ratio H/SW of the tyre section height H to the tyre width SW is 0.70 or more.

## Patentansprüche

1. Ein radialer Luftreifen mit einer Karkasse (7), die sich von einem Laufflächenteil (5) durch Seitenwandteile (4) erstreckt und an jedem Rand um einen Wulstkern (2) eines Wulstteils (3) faltet, und einer Gürtelschicht (9), die aus Gürtellagen (9a, 9b) zusammengesetzt ist, die radial außerhalb der Karkasse (7) angeordnet sind, worin eine Laufflächen-Oberfläche TS entlang einer spezifischen Krümmungsebene P gebildet ist, welche einen ersten Bogen P1, der seinen Mittelpunkt auf der Äquatorialebene des Reifens hat und durch den Äquatorialpunkt A des Reifens tritt, mit einem Krümmungsradius R1, einen zweiten Bogen P2 mit einem Krümmungsradius R2, der den ersten Bogen an einem Schnittpunkt HP schneidet, der von der Äquatorialebene des Reifens beabstandet ist und einen dritten Bogen P3 mit einem Krümmungsradius R3 umfaßt, und die Laufflächen-Oberfläche TS ist mit einer Hauptumfangsrille (16) versehen, die sich nahe dem Schnittpunkt HP des ersten Bogens P1 und des zweiten Bogens P2 in der Reifenumfangsrichtung erstreckt, was die Laufflächen-Oberfläche TS in den Kronenteil S1 und ihren äußeren Schulterteil S2 aufteilt, dadurch gekennzeichnet, daß der zweite Bogen P2 seinen Mittelpunkt auf der Äquatorialebene des Reifens hat, der Schnittpunkt HP von der Äquatorialebene des Reifens um einen Abstand 0,2 bis 0,25 mal der Reifenbreite beabstandet ist, der dritte Bogen P durch einen äußeren Aufstandspunkt E der Aufstandsfläche in der axialen Richtung des Reifens, wenn eine Standardlast aufgebracht wird, und einen Gürtel-Zwischenhöhenpunkt F auf der Laufflächen-Oberfläche TS tritt, wobei der Gürtel-Zwischenhöhenpunkt F auf der Laufflächen-Oberfläche TS als ein Punkt definiert ist, an welchem eine axiale Richtungslinie des Reifens, die sich parallel zu der Achse des Reifens aus der Dicken-Mitte der Gürtelschicht (9) bei dem axialen äußeren Rand eines Bereichs erstreckt, wo zumindest zwei Gürtellagen einander überlappen, die Laufflächen-Oberfläche TS kreuzt, und die spezifische Krümmungsebene P ein Krümmungsradius-Verhältnis R2/R3 von 4 zu 12 hat.

2. Ein radialer Luftreifen nach Anspruch 1, dadurch gekennzeichnet, daß die Hauptumfangsrille (16) eine Rillenbreite (16W) von 0,06 mal bis 0,10 mal der Reifenbreite SW hat, und enge laterale Rillen (19), die die Reifenumfangsrichtung kreuzen, den Kronenteil S1 und die Schulterteile S2 in Blöcke aufteilen.

3. Ein radialer Luftreifen nach Anspruch 1 oder 2, dadurch gekennzeichnet, daß der Kronenteil S1 oder der Schulterteil S2 eine unterstützende Umfangsrille (20) hat, die sich in der Reifenumfangsrichtung mit einer Rillenbreite (20W) von 0,1 bis 0,3 mal der Rillenbreite (16W) der Hauptumfangsrille erstreckt.

4. Ein radialer Luftreifen nach Anspruch 1, 2 oder 3, dadurch gekennzeichnet, daß die spezifische Krümmungsebene P ein Krümmungsradius-Verhältnis R1/R2 von 2,6 bis 4,6 hat, wenn das Aspektverhältnis H/SW der Reifenquerschnittshöhe H zu der Reifenbreite SW 0,55 oder weniger beträgt.

5. Ein radialer Luftreifen nach Anspruch 1, 2 oder 3, dadurch gekennzeichnet, daß die spezifische Krümmungsebene P ein Krümmungsradius-Verhältnis R1/R2 von 1,6 bis 2,6 besitzt, wenn das Aspektverhältnis H/SW der Reifenquerschnittshöhe H zu der Reifenbreite SW mehr als 0,55 und weniger als 0,70 beträgt.

6. Ein radialer Luftreifen nach Anspruch 1, 2 oder 3, dadurch gekennzeichnet, daß die spezifische Krümmungsebene P ein Krümmungsradius-Verhältnis R1/R2 von 1,2 bis 1,6 hat, wenn das Aspektverhältnis H/SW der Reifenquerschnittshöhe H zu der Reifenbreite SW 0,70 oder mehr beträgt.

## Revendications

1. Pneumatique à carcasse radiale comprenant une carcasse (7) partant d'une partie de bande de roulement (5) et passant dans des parties de flanc (4), la carcasse étant repliée à chaque bord autour d'une tringle (2) d'une partie de talon (3), et une couche de ceinture (9) composée de nappes (9a, 9b) de ceinture, placée radialement à l'extérieur de la carcasse (7), une surface TS de bande de roulement étant formée le long d'un plan de courbure particulier P qui comporte un premier arc P1 de rayon de courbure R1 dont le centre se trouve dans le plan équatorial du pneumatique et qui passe par le point équatorial A du pneumatique, un second arc P2 ayant un rayon de courbure R2 qui recoupe le premier arc en un point d'intersection HP placé à une certaine distance du plan équatorial du pneumatique, et un troisième arc P3 ayant un rayon de courbure R3, et la surface TS de la bande de roulement a une gorge circonférentielle principale (16) disposée près de l'intersection HP du premier arc P1 et du second arc P2 dans la direction circonférentielle du pneumatique, ces gorges divisant la surface PS de la bande de roulement en une partie centrale S1 et une partie externe d'épaulement S2, caractérisé en ce que le second arc P2 a son centre dans le plan équatorial du pneumatique, le point d'intersection HP est à une distance du plan équatorial du pneumatique comprise entre 0,2 et 0,25 fois la largeur du pneumatique, le troisième arc P passe par un point E de bord externe de contact avec le sol de la surface de contact avec le sol dans la direction axiale du pneumatique lorsqu'une charge nominale est appliquée et par un point F de hauteur intermédiaire de ceinture à la surface TS de la bande de roulement, le point F de hauteur intermédiaire de ceinture à la surface TS de la bande de roulement étant le point auquel une droite axiale du pneumatique qui est parallèle à l'axe du pneumatique et qui passe par le centre de la couche (20) de ceinture dans la direction de l'épaisseur au bord axial externe d'une région dans laquelle deux nappes au moins de ceinture se recouvrent recoupe la surface de ceinture TS, et le plan P de courbure particulier a un rapport de rayons de courbure R2/R3 compris entre 4 et 12.

2. Pneumatique à carcasse radiale selon la revendication 1, caractérisé en ce que la gorge circonférentielle principale (16) a une largeur (16W) qui est comprise entre 0,06 et 0,10 fois la largeur SW du pneumatique, et des gorges latérales étroites (19) recoupant la direction circonférentielle du pneumatique divisent la partie centrale S1 et les parties d'épaulement S2 en blocs.

3. Pneumatique à carcasse radiale selon la revendication 1 ou 2, caractérisé en ce que la partie centrale S1 ou la partie d'épaulement S2 a une gorge circonférentielle auxiliaire (20) placée dans la direction circonférentielle du pneumatique et ayant une largeur de gorge (20W) comprise entre 0,1 et 0,3 fois la largeur (16W) de la gorge circonférentielle principale.

4. Pneumatique à carcasse radiale selon la revendication 1, 2 ou 3, caractérisé en ce que le plan de courbure particulier a un rapport de rayons de courbure R1/R2 compris entre 2,6 et 4,6 lorsque le rapport d'allongement H/SH de la hauteur H de la section du pneumatique à la largeur SW du pneumatique est inférieur ou égal à 0,55.

5. Pneumatique à carcasse radiale selon la revendication 1, 2 ou 3, caractérisé en ce que le plan de courbure particulier P a un rapport de rayons de courbure R1/R2 compris entre 1,6 et 2,6 lorsque le rapport d'allongement H/SW de la hauteur H en coupe du pneumatique à la largeur SW du pneumatique est compris entre 0,55 et 0,70.

6. Pneumatique à carcasse radiale selon la revendication 1, 2 ou 3, caractérisé en ce que le plan de courbure particulier P a un rapport de rayons de courbure R1/R2 compris entre 1,2 et 1,6 lorsque le rapport d'allongement H/SW de la hauteur H de la section du pneumatique à la largeur SW du pneumatique est supérieur ou égal à 0,70.
